# EUROPÄISCHE PATENTSCHRIFT

(11) **EP 2 079 785 B1**
(45) Veröffentlichungstag und Bekanntmachung des Hinweises auf die Patenterteilung: **27.01.2010**
(21) Anmeldenummer: 07820918.6
(22) Anmeldetag: 04.10.2007
(51) Int. Cl.: C08J 9/00

(54) **BESCHICHTETE SCHAUMSTOFFPARTIKEL UND VERFAHREN ZUR HERSTELLUNG VON HALOGENFREIEN, FEUERBESTÄNDIGEN PARTIKELSCHAUMSTOFFFORMKÖRPERN**
COATED FOAM BEADS AND PROCESS FOR PRODUCING HALOGEN-FREE, FIRE-RESISTANT BEAD FOAM MOLDINGS
PARTICULES DE MOUSSE REVÊTUES ET PROCÉDÉ DE PRODUCTION D'ARTICLES MOULÉS EN MOUSSE PARTICULAIRE SANS HALOGÈNE RÉSISTANT AU FEU

(30) Priorität: 11.10.2006 EP 06122127
(43) Veröffentlichungstag der Anmeldung: 22.07.2009
(73) Patentinhaber: BASF SE, 67056 Ludwigshafen (DE)
(72) Erfinder: HAHN, Klaus, 67281 Kirchheim (DE); NEHLS, Benjamin, 67063 Ludwigshafen (DE); SCHMIED, Bernhard, 67227 Frankenthal (DE); RIETHUES, Michael, 67071 Ludwigshafen (DE); KELLER, Andreas, 67459 Böhl-Iggelheim (DE); WARZELHAN, Volker, 67273 Weisenheim (DE)
(86) Internationale Anmeldenummer: PCT/EP2007/060541
(87) Internationale Veröffentlichungsnummer: WO 2008/043700

(56) Entgegenhaltungen:
- EP-A- 0 335 050
- EP-A- 1 270 653
- WO-A-00/50500
- WO-A-2005/105404
- US-A- 4 066 352

## Beschreibung

Die Erfindung betrifft ein Verfahren zur Herstellung von beschichteten Schaumstoffpartikeln, sowie daraus hergestellte Schaumstoffformköper und deren Verwendung.

Partikelschaumstoffe werden üblicherweise durch Versintern von Schaumstoffpartikeln, beispielsweise aus vorgeschäumten expandierbaren Polystyrolpartikeln (EPS) oder expandierten Polypropylenpartikeln (EPP), in geschlossenen Formen mittels Wasserdampf erhalten.

Schwerentflammbare Polystyrolschaumstoffe werden in der Regel mit halogenhaltigen Flammschutzmitteln, wie Hexabromocyclododecan (HBCD), ausgerüstet. Die Zulassung als Dämmstoffe im Bausektor ist allerdings auf bestimmte Anwendungen begrenzt. Ursache dafür ist unter anderem das Schmelzen und Abtropfen der Polymermatrix im Brandfalle. Darüber hinaus sind die halogenhaltigen Flammschutzmittel hinsichtlich ihrer toxikologischen Eigenschaften nicht uneingeschränkt einsetzbar.

Die WO 00/050500 beschreibt flammgeschützte Schaumstoffe aus vorgeschäumten Polystyrolpartikeln, welche zusammen mit einer wässrigen Natriumsilikatlösung und einem Latex eines hochmolekularen Vinylacetatcopolymer gemischt, in eine Form gegossen und unter Schütteln an Luft getrocknet werden. Hierbei entsteht nur eine lose Schüttung aus Polystyrolpartikeln, die an wenigen Punkten miteinander verklebt sind und daher nur ungenügende mechanische Festigkeiten aufweisen.

Die WO 2005/105404 beschreibt ein energiesparendes Verfahren zur Herstellung von Schaumstoffformkörpern, bei der die vorgeschäumten Schaumstoffpartikel mit einer Harzlösung beschichtet werden, welche eine gegenüber dem expandierbaren Polymer niedrigere Erweichungstemperatur aufweist. Die beschichteten Schaumstoffpartikel werden anschließend in einer Form unter Anwendung äußeren Drucks oder durch Nachexpansion der Schaumstoffpartikel mit heißem Wasserdampf verschweißt.

Die WO 2005/07331 beschreibt expandierte Polystyrolschaumstoffpartikel mit einer funktionellen Beschichtung, welche mittels eines Lösungsmittels, welches die Polystyrolschaumstoffpartikel nur wendig angreift, aufgebracht wird. Zur Flammschutzbeschichtung kann die Oberfläche beispielsweise mit einer Alumiumhydroxidpartikel enthaltenden, methanolischen Polyvinylacetatlösung beschichtet werden. Um ein Verkleben während der Entfernung des Lösungsmittels zu verhindern, müssen die Partikel mit einer Trennflüssigkeit, beispielsweise Ethylenglykol besprüht werden.

Werden in den üblichen Formteilautomaten beschichtete Schaumstoffpartikel eingesetzt, so können bei der Verwendung von Wasserdampf wasserlösliche Bestandteile herausgelöst werden.

Die nachveröffentlichte WO 2007/013791 beschreibt die Herstellung von flammgeschützen Verbundstrukturen durch Versintern von Schaumstoffpartikeln, auf die zuvor in einer Wirbelschicht eine Gel-bildenden Aluminiumsilikatlösung als Flammschutzbeschichtung aufgesprüht wurde. Zur Verbesserung der Wasserbeständigkeit können organische Flüssigkeiten, wie Silikon- oder Paraffinöle zugegeben werden.

Aufgabe der Erfindung war es daher, den genannten Nachteilen abzuhelfen und Schaumstoffpartikel bereitzustellen, die in üblichen Apparaturen auch mit Wasserdampf einfach zu halogenfreien und feuer- und hitzebeständigen Schaumstoffformteilen verarbeitbar sind.

Demgemäss wurde ein Verfahren zur Herstellung von beschichteten Schaumstoffpartikeln gefunden, wobei man eine wässrige Polymerdispersion auf die Schaumstoffpartikel aufbringt und anschließend unter Bildung eines wasserunlöslichen Polymerfilms trocknet.

Die Trocknung der auf die Schaumstoffpartikel aufgetragenen Polymerdispersion kann beispielsweise in einem Wirbelbett, Schaufeltrockner oder durch Durchleiten von Luft oder Stickstoff durch eine lockere Schüttung erfolgen. In der Regel ist für die Bildung des wasserunlöslichen Polymerfilmes eine Trocknungsdauer von 5 Minuten bis 24 Stunden, vorzugsweise 30 bis 180 Minuten bei einer Temperatur im Bereich von 0 bis 80°C, bevorzugt im Bereich von 30 bis 60°C ausreichend.

Der Wassergehalt der beschichteten Schaumstoffpartikel liegt nach der Trocknung bevorzugt im Bereich von 1 bis 40 Gew.-%, besonders bevorzugt im Bereich von 2 bis 30 Gew.-%, ganz besonders bevorzugt im Bereich von 5 bis 15 Gew.-%. Er kann beispielsweise durch Karl-Fischer-Titration der beschichteten Schaumstoffpartikel bestimmt werden. Das Gewichtsverhältnis Schaumstoffpartikel/Beschichtungsmischung beträgt nach der Trocknung bevorzugt 2:1 bis 1:10, besonders bevorzugt 1:1 bis 1:5.

Als Schaumstoffpartikel können expandierte Polyolefine, wie expandiertes Polyethylen (EPE) oder expandiertes Polypropylen (EPP) oder vorgeschäumte Partikel aus expandierbaren Styrolpolymeren, insbesondere expandierbarem Polystyrol (EPS) eingesetzt werden. Die Schaumstoffpartikel weisen in der Regel einen mittleren Partikeldurchmesser im Bereich von 2 bis 10 mm auf. Die Schüttdichte der Schaumstoffpartikel beträgt in der Regel 5 bis 100 kg/m³, bevorzugt 5 bis 40 kg/m³ und insbesondere 8 bis 16 kg/m³, bestimmt nach DIN EN ISO 60.

Die Schaumstoffpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck- oder kontinuierlichen Vorschäumer können hierbei Endschüttdichten unter 10 g/l erhalten werden.

Aufgrund ihrer hohen Wärmedämmfähigkeit verwendet man besonders bevorzugt vorgeschäumte, expandierbare Styrolpolymerisate, die athermane Festkörper, wie Ruß, Aluminium oder Graphit, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Des weiteren können die erfindungsgemäßen Schaumstoffpartikel 3 bis 60 Gew.-%, bevorzugt 5 bis 20 Gew.-%, bezogen auf die vorgeschäumten Schaumstoffpartikel, eines Füllstoffes enthalten. Als Füllstoffe kommen organische und anorganische Pulver oder Faserstoffe, sowie Mischungen davon in Betracht. Als organische Füllstoffe können z. B. Holzmehl, Stärke, Flachs-, Hanf-, Ramie-, Jute-, Sisal-, Baumwoll-, Cellulose- oder Aramidfasern eingesetzt werden. Als anorganische Füllstoffe können z. B. Carbonate, Silikate, Schwerspat, Glaskugeln, Zeolithe oder Metalloxide eingesetzt werden. Bevorzugt werden pulverförmige anorganische Stoffe, wie Talk, Kreide, Kaolin (Al₂(Si₂O₅)(OH)₄), Aluminiumhydroxid, Magnesiumhydroxid, Aluminiumnitrid, Aluminiumsilikat, Bariumsulfat, Calciumcarbonat, Calciumsulfat, Kieselsäure, Quarzmehl, Aerosil, Tonerde oder Wollastonit oder Kugel- oder faserförmige, anorganische Stoffe, wie Glaskugeln, Glasfasern oder Kohlefasern.

Die mittleren Teilchendurchmesser bzw. bei faserförmigen Füllstoffen die Länge sollte im Bereich der Zellgröße oder kleiner liegen. Bevorzugt wird ein mittlerer Teilchendurchmesser im Bereich von 1 bis 100 µm, bevorzugt im Bereich von 2 bis 50 µm.

Besonders bevorzugt werden anorganische Füllstoffe mit einer Dichte im Bereich von 1,0 - 4,0 g/cm³, insbesondere im Bereich von 1,5 - 3,5 g/cm³. Der Weißgrad/Helligkeit (DIN/ISO) beträgt bevorzugt 50 -100 %, insbesondere 60 - 98 %.

Die Art und Menge der Füllstoffe können die Eigenschaften der expandierbaren thermoplastischen Polymeren und der daraus erhältlichen Partikelschaumstoffformteile beeinflussen. Durch die Verwendung von Haftvermittlern, wie Maleinsäureanhydridmodifizierte Styrolcopolymere, epoxidgruppenhaltige Polymere, Organosilane oder Styrolcopolymere mit Isocyanat- oder Säuregruppen kann die Anbindung des Füllstoffes an die Polymermatrix und damit die mechanischen Eigenschaften der Partikelschaumformteile deutlich verbessert werden.

In der Regel verringern anorganische Füllstoffe die Brennbarkeit. Insbesondere durch Zusatz von anorganischen Pulvern, wie Aluminiumhydroxid, Magnesiumhydroxid oder Borax, kann das Brandverhalten weiter verbessert werden.

Derartige füllstoffhaltiger Schaumstoffpartikel können beispielsweise durch Verschäumen von füllstoffhaltigen, expandierbaren thermoplastischen Granulaten erhalten werden. Bei hohen Füllstoffgehalten können die hierfür benötigten expandierbaren Granulate durch Extrusion treibmittelhaltiger Thermoplastschmelzen und anschließende Druckunterwassergranulierung, wie z. B. in WO 2005/056653 beschrieben, erhalten werden.

Die Polymerschaumstoffpartikel können zusätzlich mit weiteren Flammschutzmitteln ausgerüstet sein. Sie können hierzu beispielsweise 1 bis 6 Gew.-% einer organischen Bromverbindung, wie Hexabromcylcododecan (HBCD) und gegebenenfalls zusätzlich 0,1 bis 0,5 Gew.-% Dicumyl oder eines Peroxides im Innern der Schaumstoffpartikel oder der Beschichtung enthalten. Bevorzugt werden jedoch keine halogenhaltigen Flammschutzmittel verwendet.

In der Regel besteht die Beschichtung aus einem Polymerfilm, der eine oder mehrere Glasübergangstemperaturen im Bereich von -60° bis + 100 °C aufweist und in dem gegebenenfalls Füllstoffe eingebettet sein können. Bevorzugt liegen die Glasübergangstemperaturen des getrockneten Polymerfilmes im Bereich von -30° bis + 80°C, besonders bevorzugt im Bereich von -10° bis + 60°C. Die Glasübergangstemperatur kann mittels Differential Scanning Calorimetrie (DSC) bestimmt werden. Das Molekulargewicht des Polymerfilms, bestimmt nach Gelpermeationschromatographie (GPC), liegt bevorzugt unter 400.000 g/mol.

Zur Beschichtung der Schaumstoffpartikel können übliche Verfahren, wie Besprühen, Tauchen oder Benetzen der Schaumstoffpartikel mit der wässrigen Polymerdispersion in üblichen Mischern, Sprühvorrichtungen, Tauchvorrichtungen bzw. Trommelapparaturen eingesetzt werden.

Für die Beschichtung eigenen sich beispielsweise Polymere auf Basis von Monomeren wie vinylaromatischen Monomeren, wie α-Methylstyrol, p-Methylstyrol, Ethylstyrol, tert.-Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, α,β-ungesättigten Carbonsäuren, wie Acrylsäure und Methacrylsäure, deren Estern, insbesondere Alkylester, wie C₁₋₁₀-Alkylester der Acrylsäure, insbesondere die Butylester, vorzugsweise n-Butylacrylat, und die C₁₋₁₀-Alkylester der Methacrylsäure, insbesondere Methylmethacrylat (MMA), oder Carbonsäureamide, beispielsweise Acrylsäureamid und Methacrylsäureamid.

Die Polymeren können gegebenenfalls 1 bis 5 Gew.-% Comonomere, wie (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure, Methylolacrylamid oder das Natriumsalz der Vinylsulfonsäure enthalten.

Bevorzugt sind die Polymeren der Beschichtung aus ein oder mehreren der Monomeren Styrol, Butadien, Acrylsäure, Methacrylsäure, C₁₋₄-Alkylacrylaten, C₁₋₄-Alkylmethacrylaten, Acrylsäureamid, Methacrylsäureamid und Methylolacrylsäureamid aufgebaut.

Als Bindemittel für die Polymerbeschichtung eignen sich insbesondere Acrylatharze, die erfindungsgemäß als wässrige Polymerdispersionen auf die Schaumstoffpartikel, gegebenenfalls zusätzlich mit hydraulischen Bindemitteln auf Basis von Zement, Kalkzement oder Gips aufgetragen werden. Geeignete Polymerdispersionen sind beispielsweise durch radikalische Emulsionspolymerisation von ethylenisch ungesättigten Monomeren, wie Styrol, Acrylate oder Methacrylate, wie in WO 00/50480 beschrieben, erhältlich.

Besonders bevorzugt sind reine Acrylate oder Styrol-Acrylate, welche aus den Monomeren Styrol, n-Butylacrylat, Methylmetharcylat (MMA), Methacrylsäure, Acrylamid oder Methylolacrylamid, aufgebaut sind.

Die Herstellung der Polymerdispersion erfolgt in an sich bekannter Weise, etwa durch Emulsions-, Suspensions-, oder Dispersionspolymerisation, bevorzugt in wässriger Phase. Man kann das Polymer auch durch Lösungs- oder Massepolymerisation herstellen, ggf. zerteilen und die Polymerpartikel anschließend in Wasser in üblicher Weise dispergieren. Bei der Polymerisation werden die für das jeweilige Polymerisationsverfahren üblichen Initiatoren, Emulgatoren bzw. Suspensionshilfsmittel, Regler bzw. sonstigen Hilfsstoffe mitverwendet; und man polymerisiert kontinuierlich oder diskontinuierlich bei den für das jeweilige Verfahren üblichen Temperaturen und Drucken in gebräuchlichen Reaktoren.

Die Polymerbeschichtung kann auch Additive, wie anorganische Füllstoffe, wie Pigmente oder Flammschutzmittel enthalten. Der Anteil an Additiven hängt von dessen Art und der gewünschten Wirkung ab und beträgt für anorganische Füllstoffe in der Regel 10 bis 99 Gew.-%, bevorzugt 20 bis 98 Gew.-%, bezogen auf die Additiv-haltige Polymerbeschichtung

Bevorzugt enthält die Beschichtungsmischung wasserbindende Substanzen wie z.B. Wasserglas. Dies führt zu einer besseren bzw. schnelleren Verfilmung der Polymerdispersion und damit einem schnelleren Aushärten des Schaumstoffformteils.

Bevorzugt enthält die Polymerbeschichtung Flammschutzmittel, wie Blähgraphit, Borate, insbesondere Zinkborate, Melaminverbindungen oder Phosphorverbindungen oder intumeszierende Massen, welche sich bei Einwirkung höherer Temperaturen, in der Regel über 80 bis 100°C, aufblähen, quellen oder aufschäumen und dabei einen isolierenden und hitzebeständigen Schaum bilden, der die darunter liegenden wärmedämmende Schaumstoffpartikel vor der Feuer- und Hitzewirkung schützt. Die Menge der Flammschutzmittel oder intumeszierenden Massen beträgt in der Regel, 2 bis 99 Gew.-%, bevorzugt 5 bis 98 Gew. %, bezogen auf die Polymerbeschichtung.

Bei Verwendung von Flammschutzmitteln in der Polymerbeschichtung, ist es auch möglich, einen ausreichenden Brandschutz bei Verwendung von Schaumstoffpartikeln, die keine, insbesondere keine halogenierten Flammschutzmittel enthalten, zu erreichen, bzw. mit geringeren Mengen an Flammschutzmittel auszukommen, da sich das Flammschutzmittel in der Polymerbeschichtung konzentriert auf der Oberfläche der Schaumstoffpartikel befindet und bei Hitze- oder Feuereinwirkung ein festes Gerüstnetz bildet.

Besonders bevorzugt enthält die Polymerbeschichtung als Additive intumeszierende Massen, die chemisch gebundenes Wasser enthalten oder bei Temperaturen über 40°C Wasser abspalten, wie Alkalimetallsilikate, Metallhydroxide, Metallsalz-Hydrate und Metalloxid-Hydrate.

Mit dieser Beschichtung versehene Schaumstoffpartikel können zu Schaumstoffformkörpem mit erhöhter Brandbeständigkeit verarbeitet werden. Je nach Menge der Beschichtung können die erfindungsgemäßen Schaumstoffkörper in die Baustoffklasse B1 bzw. A2 gemäß DIN 4102, bzw. der Euroklassen A2, B und C gemäß der europäischen Brandschutzklassifizierung DIN EN 13501-1 eingestuft werden.

Geeignete Metallhydroxide sind insbesondere solche der Gruppen 2 (Erdalkalimetalle) und 13 (Bor-Gruppe) des Periodensystems. Bevorzugt sind Magnesiumhydroxid, Aluminiumhydroxid und Borax. Besonders bevorzugt ist Alumniniumhydroxid.

Als Metallsalz-Hydrate eignen sich alle Metallsalze, in deren Kristallstruktur Kristallwasser eingebaut ist. Analog eignen sich als Metalloxid-Hydrate alle Metalloxide, die in die Kristallstruktur eingebautes Kristallwasser enthalten. Dabei kann die Anzahl der Kristallwassermoleküle pro Formeleinheit die maximal mögliche sein oder darunter liegen, z.B. Kupfersulfat-Pentahydrat, -Trihydrat oder -Monohydrat. Zusätzlich zum Kristallwasser können die Metallsalz-Hydrate bzw. Metalloxid-Hydrate auch Konstitutionswasser enthalten.

Bevorzugte Metallsalz-Hydrate sind die Hydrate von Metallhalogeniden (insbesondere -chloriden), -sulfaten, -carbonaten, -phosphaten, -nitraten oder -boraten. Geeignet sind beispielsweise Magnesiumsulfat-Decahydrat, Natriumsulfat-Decahydrat, Kupfersulfat-Pentahydrat, Nickelsulfat-Heptahydrat, Cobalt(II)chlorid-Hexahydrat, Chrom(III)-chlorid-Hexahydrat, Natriumcarbonat-Decahydrat, Magnesiumchlorid-Hexahydrat, und die Zinnborat-Hydrate. Magnesiumsulfat-Decahydrat und Zinnborat-Hydrate sind besonders bevorzugt.

Ebenfalls als Metallsalz-Hydrate in Betracht kommen Doppelsalze bzw. Alaune, beispielsweise solche der allgemeinen Formel: M^{I}M^{III}(SO₄)₂ · 12 H₂O. Als M^{I} können z.B. Kalium, Natrium, Rubidium, Cäsium, Ammonium, Thallium oder Aluminium-Ionen auftreten. Als M^{III} fungieren z.B. Aluminium, Gallium, Indium, Scandium, Titan, Vanadium, Chrom, Mangan, Eisen, Cobalt, Rhodium oder Iridium.

Als Metalloxid-Hydrate eignen sich z.B. Aluminiumoxid-Hydrat und bevorzugt Zinkoxid-Hydrat oder Bortrioxid-Hydrat.

Eine bevorzugte Polymerbeschichtung kann durch Mischen von
a) 40 bis 80, bevorzugt 50 bis 70 Gew.-Teilen einer Wasserglaslösung mit einem Wassergehalt von 40 bis 90, bevorzugt 50 bis 70 Gew.-%,
b) 20 bis 60, bevorzugt 30 bis 50 Gew.-Teilen eines Wasserglaspulvers mit einem Wassergehalt von 0 bis 30, bevorzugt 1 bis 25 Gew.-%, und
c) 5 bis 40, bevorzugt 10 bis 30 Gew.-Teile einer Polymerdispersion mit einem Feststoffgehalt von 10 bis 60, bevorzugt 20 bis 50 Gew.-%, oder durch Mischen von
   a') 20 bis 95, bevorzugt 40 bis 90 Gew.-Teilen einer Aluminiumhydroxidsuspension mit einem Aluminiumhydroxidgehalt von 10 bis 90, bevorzugt 20 bis 70 Gew.-%,
   b') 5 bis 40, bevorzugt 10 bis 30 Gew.-Teile einer Polymerdispersion mit einem Feststoffgehalt von 10 bis 60, bevorzugt 20 bis 50 Gew.-%,
erhalten werden.

Des weiteren kann die Beschichtung Füllstoffe, insbesondere IR-absorbierende Füllstoffe enthalten. Füllstoffe mit Partikelgrößen im Bereich von 0,1 bis 100 µm, insbesondere im Bereich von 0,5 und 10 µm ergeben im Polystyrol-Schaumstoff bei Gehalten von 10 Gew.-% eine Absenkung der Wärmeleitfähigkeit um 1 bis 3 mW. Daher lassen sich schon bei geringeren Mengen and IR-Absorbern, wie Ruß und Graphit vergleichsweise niedrige Wärmeleitfähigkeiten erreichen.

Bevorzugt wird zur Verringerung der Wärmeleitfähigkeit ein IR-Absorber, wie Ruß, Koks, Aluminium oder Graphit in Mengen von 0,1 bis 10 Gew.-%, insbesondere in Mengen von 2 bis 8 Gew.-%, bezogen auf den Feststoff der Beschichtung, eingesetzt.

Bevorzugt wird Ruß mit einer mittleren Primär-Teilchengröße im Bereich von 10 bis 300 nm, insbesondere im Bereich von 30 bis 200 nm eingesetzt. Die BET-Oberfläche liegt bevorzugt im Bereich von 10 bis 120 m²/g.

Als Graphit wird bevorzugt Graphit mit einer mittleren Teilchengröße im Bereich von 1 bis 50 µm eingesetzt.

Des weiteren können die erfindungsgemäßen Schaumstoffpartikel mit amphiphilen oder hydrophoben organische Verbindung beschichtet werden. Die Beschichtung mit Hydrophobierungsmittel erfolgt zweckmäßigerweise vor dem Aufbringen der erfindungsgemäßen wässrigen Polymerdispersion. Unter den hydrophoben organischen Verbindungen sind insbesondere C₁₀ - C₃₀- Paraffinwachse, Umsetzungsprodukte aus N-Methylolamin und einem Fettsäurederivate, Umsetzungsprodukte eines C₉-C₁₁-Oxoalkohols mit Ethylenoxid, Propylenoxid oder Butylenoxid oder Polyfluoralkyl(meth)-acrylate oder Mischungen davon zu nennen, die vorzugsweise in Form wässriger Emulsionen eingesetzt werden können.

Bevorzugte Hydrophobierungsmittel sind Paraffinwachse mit 10 bis 30 C-Atomen in der Kohlenstoffkette, die vorzugsweise einen Schmelzpunkt zwischen 10 und 70°C, insbesondere zwischen 25 und 60°C, aufweisen. Derartige Paraffinwachse sind beispielsweise in den BASF-Handelsprodukten RAMASIT KGT, PERSISTOL E und PERSISTOL HP sowie in AVERSIN HY-N von Henkel und CEROL ZN von Sandoz enthalten.

Eine andere Klasse geeigneter Hydrophobierungsmittel sind harzartige Umsetzungsprodukte von einem N-Methylolamin mit einem Fettsäurederivat, z.B. einem Fettsäureamid, -amin oder -alkohol, wie sie z.B. in US-A 2 927 090 oder GB-A 475 170 beschrieben sind. Ihr Schmelzpunkt liegt im allgemeinen bei 50 bis 90°C. Derartige Harze sind z.B. in dem BASF-Handelsprodukt PERSISTOL HP und in ARCOPHOB EFM von Hoechst enthalten.

Schließlich sind auch Polyfluoralkyl(meth-)acrylate geeignet, beispielsweise Polyperfluoroctylacrylat. Diese Substanz ist in dem BASF-Handelsprodukt PERSISTOL O und in OLEOPHOBOL C von Pfersee enthalten.

Als weitere Beschichtungsmittel kommen Antistatika, wie Emulgator K30 (Gemisch aus sekundären Natriumalkansulfonaten) oder Glycerinstearate, wie Glycerinmonostearat GMS oder Glycerintristearat in Betracht. Das erfindungsgemäße Verfahren zeichnet sich jedoch dadurch aus, dass die für die Beschichtung von expandierbarem Polystyrol üblichen Beschichtungsmittel, insbesondere Stearate in reduziertem Umfang eingesetzt oder ganz entfallen können, ohne die Produktqualität negativ zu beeinflussen.

Die erfindungsgemäß beschichteten Schaumstoffpartikel können in üblichen Formen mit Heißluft oder Wasserdampf zu Schaumstoffformkörpern versintert werden.

Beim Versintern bzw. Verkleben der Schaumstoffpartikel kann der Druck beispielsweise durch Verkleinerung des Volumens der Form mittels eines beweglichen Stempels erzeugt werden. In der Regel wird hierbei ein Druck im Bereich von 0,5 bis 30 kg/cm² eingestellt. Die Mischung aus beschichteten Schaumstoffpartikeln wird hierzu in die geöffnete Form gefüllt. Nach dem Verschließen der Form werden die Schaumstoffpartikel mit dem Stempel verpresst, wobei die Luft zwischen den Schaumstoffpartikeln entweicht und das Zwickelvolumen verringert wird. Die Schaumstoffpartikel werden durch die Polymerbeschichtung zum Schaumstoffformkörper verbunden.

Das Formwerkzeug wird entsprechend der gewünschten Geometrie des Schaumstoffkörpers ausgestaltet. Der Füllgrad richtet sich u.a. nach der gewünschten Dicke des späteren Formteils. Für Schaumstoffplatten kann eine einfache kastenförmige Form verwendet werden. Insbesondere bei komplizierteren Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Zur Beschleunigung des Abbindens kann Heißluft oder Wasserdampf in die Form eingedrückt oder die Form beheizt werden. Zur Temperierung der Form können jedoch beliebige Wärmeträgermedien, wie Öl oder Dampf eingesetzt werden. Die Heißluft bzw. die Form wird hierfür zweckmäßigerweise auf eine Temperatur im Bereich von 20 bis 120°C, bevorzugt 30 bis 90°C temperiert.

Alternativ oder zusätzlich kann das Versintern kontinuierlich oder diskontinuierlich unter Einstrahlung von Mikrowellenenergie erfolgen. Hierbei werden in der Regel Mikrowellen im Frequenzenbereich zwischen 0,85 und 100 GHz, bevorzugt 0,9 bis 10 GHz und Bestrahlungszeiten zwischen 0,1 bis 15 Minuten verwendet. Damit lassen sich auch Schaumstoffplatten mit einer Dicke von mehr als 5 cm herstellen.

Bei Verwendung von Heißluft oder Wasserdampf mit Temperaturen im Bereich von 80 bis 150°C oder durch Einstrahlen von Mikrowellenenergie bildet sich üblicherweise ein Überdruck von 0,1 bis 1,5 bar, so dass das Verfahren auch ohne äußeren Druck und ohne Volumenverringerung der Form durchgeführt werden kann. Der durch die Mikrowellen oder höheren Temperaturen entstehenden Innendruck lässt die Schaumstoffpartikel leicht weiterexpandieren, wobei diese zusätzlich zur Verklebung über die Polymerbeschichtung auch durch Erweichung der Schaumstoffpartikel selbst verschweißen können. Dabei verschwinden die Zwickel zwischen den Schaumstoffpartikeln. Zur Beschleunigung des Abbindens kann auch hier die Form wie oben beschrieben mit einem Wärmeträgermedium zusätzlich beheizt werden.

Zur kontinuierlichen Herstellung der Schaumstoffformkörper eignen sich auch Doppelbandanlagen wie sie zur Herstellung von Polyurethanschaumstoffen verwendet werden. Beispielsweise können die vorgeschäumten und beschichteten Schaumstoffpartikel kontinuierlich auf das untere von zwei Metallbänder, welche gegebenenfalls eine Perforation aufweisen können, aufgetragen werden und mit oder ohne Kompression durch die zusammenlaufenden Metallbänder zu endlosen Schaumstoffplatten verarbeitet werden. Bei einem hohen Kompressionsdruck werden bevorzugt Metallgliederketten eingesetzt.

Geeignet ist auch eine Doppelbandanlage mit einem Unterband und ein sich synchron mit dem Unterband bewegendes Oberband aufweist, wie sie beispielsweise in WO 02/26457 zur Herstellung von anorganischen Schaumstoffen beschrieben ist. Das Unterband der Doppelbandanlage besteht aus einer Vielzahl von Segmenten, die im Querschnitt den unteren und die beiden seitlichen Bereiche des Schaumstoffprofils bestimmen. Das Oberband taucht in einem Teilbereich der Doppelbandanlage dichtend in die Segmente des Unterbandes ein, so dass dieser Teilbereich der Doppelbandanlage einen geschlossenen, allseits abgedichteten Raum bildet. Die Segmente des Ober- und Unterbandes werden bevorzugt aus Edelstahl gefertigt.

In einer Verfahrensausführung wird das Volumen zwischen den beiden Bändern zunehmend verringert, wodurch das Produkt zwischen den Bändern komprimiert wird und die Zwickel zwischen den Schaumstoffpartikeln verschwinden. Nach einer Aushärtungszone wird eine Endlos-Platte erhalten. In einer anderen Ausführungsform kann das Volumen zwischen den Bändern konstant gehalten werden und eine Zone mit Heißluft oder Mikrowellenbestrahlung durchlaufen in der die Schaumstoffpartikel nachschäumen. Auch hier verschwinden die Zwickel und eine Endlosplatte wird erhalten. Es ist auch möglich, die beiden kontinuierlichen Verfahrensauführungen zu kombinieren.

Im Falle einer Doppelbandanlage mit Metallbändern wird die Mikrowelle bevorzugt seitlich in den Spalt zwischen dem oberen und unteren Metallband eingestrahlt. In einer anderen Ausführungsform kann die Metallbandstrecke nach erfolgter Kompression enden, der weitere Transport und die Formhaltung der Endlos-Schaumstoffplatte wird durch ein nachgeschaltetes System aus ebenfalls umlaufenden beschichteten Natur- oder Kunstfaserbändern übernommen werden, die sich sowohl über den seitlichen Spalt als auch flächig durch die Natur- oder Kunstfaserbänder mit Mikrowelle bestrahlen lassen

Die Dicke, Länge und Breite der Schaumstoffplatten kann in weiten Grenzen variieren und wird durch die Größe und Schließkraft des Werkzeugs begrenzt. Die Dicke der Schaumstoffplatten beträgt üblicherweise 1 bis 500 mm, bevorzugt 10 bis 300 mm.

Die Dichte der Schaumstoffformkörper gemäß DIN 53420 beträgt in der Regel 10 bis 120 kg/m³, bevorzugt 20 bis 90 kg/m³. Mit dem Verfahren ist es möglich, Schaumstoffformkörper mit gleichmäßigem Dichte über den gesamten Querschnitt zu erhalten. Die Dichte der Randschichten entspricht etwa der Dichte der inneren Bereiche des Schaumstoffformkörpers.

Bei dem Verfahren können auch zerkleinerte Schaumstoffpartikel aus recyclierten Schaumstoffformkörpern eingesetzt werden. Zur Herstellung der erfindungsgemäßen Schaumstoffformkörper können die zerkleinerten Schaumstoffrecyclate zu 100 % oder z. B in Anteilen von 2 bis 90 Gew.-% insbesondere 5 bis 25 Gew.-% zusammen mit Neuware eingesetzt werden, ohne wesentliche Beeinträchtigung der Festigkeit und der mechanischen Eigenschaften.

Ein bevorzugtes Verfahren umfasst die Stufen:
i) Vorschäumen von expandierbaren Styrolpolymeren zu Schaumstoffpartikeln,
ii) Aufbringen einer wässrigen Polymerdispersion auf die Schaumstoffpartikel,
iii) Trocknen der Polymerdisperison unter Bildung eines wasserunlöslichen Polymerfilms
iv) Einfüllen der mit dem Polymerfilm beschichteten Schaumstoffpartikel in eine Form und Versintern.

Das Verfahren eignet sich zur Herstellung von einfachen oder komplexen Schaumstoffformteilen, wie Platten, Blöcken, Rohren, Stäben, Profilen, etc. Bevorzugt werden Platten oder Blöcke, welche anschließend zu Platten gesägt oder geschnitten werden können, hergestellt. Sie können beispielsweise im Bauwesen zur Dämmung von Außenwänden verwendet werden. Besonders bevorzugt werden sie als Kernschicht zur Herstellung von Sandwich-Element, beispielsweise sogenannten structural insulation panels (SIP) verwendet, welch für die Errichtung von Kühlhäuser oder Lagerhallen eingesetzt werden.

Weitere Anwendungsmöglichkeiten sind Paletten aus Schaumstoff als Ersatz für Holzpaletten, Deckensichtplatten, Kühlkontainer, Wohnwagen. Aufgrund der hervorragenden Feuerbeständigkeit eignen sich diese auch für die Luftfracht.

### Beispiele:

### Herstellung der Beschichtungsmischung BM1:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 5 Teile einer Acrylatdispersion (Acronal S790, Feststoffgehalt ca. 50 %) untergerührt.

### Herstellung der Beschichtungsmischung BM2:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 20 Teile einer Acrylatdispersion (Acronal S790, Feststoffgehalt ca. 50%) untergerührt.

### Polystyrolschaumstoffpartikel (Dichte 17 g/l)

Expandierbares Polystyrol (Neopor® 2300 der BASF Aktiengesellschaft, Perlgröße des Rohstoffes 1,4 - 2,3 mm) wurde auf einem kontinuierlichen Vorschäumer auf eine Dichte von ca. 17 g/l vorgeschäumt.

### Beispiel 1 - 4

Die Polystyrolschaumstoffpartikel wurden in einem Mischer mit der Beschichtungsmischung BM1 bzw. BM2 im Gewichtsverhältnis 1:4 bzw. 1:5 beschichtet und anschließend 12 Stunde durch Auslegen an Luft getrocknet Die beschichteten Polystyrolschaumstoffpartikel wurden in eine Teflonbeschichtete Form gefüllt und mittels Dampfdüsen bei 0,5 bar Überdruck für 30 Sekunden bedampft. Das Formteil wurde aus der Form genommen und zur weiteren Konditionierung mehrere Tage bei Umgebungstemperatur gelagert. Die Dichte des gelagerten Formteils betrug 50 g/l.

**Tabelle 1**

| | Beschichtungsmischung | Gewichtsverhältnis EPS/Beschichtungsmischung |
|---|---|---|
| Beispiel 1 | BM 1 | 1:5 |
| Beispiel 2 | BM 2 | 1:5 |
| Beispiel 3 | BM 1 | 1:4 |
| Beispiel 4 | BM 1 | 1:5 |

Die Schaumstoffformkörper der Beispiele 1 bis 4 zeichnen sich dadurch aus, dass sie im Brandtest nicht abtropfen und bei Hitzeeinwirkung nicht zurückweichen. Sie selbstverlöschend.

## Patentansprüche

1. Verfahren zur Herstellung von Schaumstoffformkörpem umfassend die Stufen
i) Vorschäumen von expandierbaren Styrolpolymeren zu Schaumstoffpartikeln,
ii) Aufbringen einer wässrigen Polymerdispersion auf die Schaumstoffpartikel,
iii) Trocknen der Polymerdispersion unter Bildung eines wasserunlöslichen Polymerfilmes,
iv) Einfüllen der mit dem Polymerfilm beschichteten Schaumstoffpartikel in eine Form und Versintern.

2. Verfahren nach Anspruch 1, **dadurch gekennzeichnet, dass** die Trocknung der auf die Schaumstoffpartikel aufgetragenen Polymerdispersion mit Luft oder Stickstoff bei einer Temperatur im Bereich von 0 bis 80°C erfolgt.

3. Verfahren nach Anspruch 1 oder 2, **dadurch gekennzeichnet, dass** man eine wässrige Polymerdispersion verwendet, welche durch Mischen von
a) 40 bis 80 Gewichtsteilen einer Wasserglaslösung mit einem Wassergehalt von 40 bis 90 Gew.-%,
b) 20 bis 60 Gewichtteilen eines Wasserglaspulvers mit einem Wassergehalt von 0 bis 30 Gew.-% und
c) 5 bis 40 Gewichtsteilen einer wässrigen Polymerdispersion mit einem Feststoffgehalt von 10 bis 60 Gew.-% erhalten wurde.

4. Verfahren nach einem der Ansprüche 1 bis 3, **dadurch gekennzeichnet, dass** der getrocknete Polymerfilm eine Glasübergangstemperatur im Bereich von -60 bis +60°C aufweist.

5. Verfahren nach einem der Ansprüche 1 bis 4, **dadurch gekennzeichnet, dass** als wässrige Polymerdispersion ein radikalisches Emulsionspolimerisat von ethylenisch ungesättigten Monomeren eingesetzt wird.

6. Verfahren nach einem der Ansprüche 1 bis 5, **dadurch gekennzeichnet, dass** das Gewichtsverhältnis Schaumstoffpartikel/Beschichtungsmischung nach dem Trocknen 2:1 bis 1:10 beträgt.

7. Verfahren nach einem der Ansprüche 1 bis 6, **dadurch gekennzeichnet, dass** die Dichte der Schaumstoffformkörper gemäß DIN 53420 10 bis 120 kg/m³ beträgt.

8. Verfahren nach Anspruch 7, **dadurch gekennzeichnet, dass** das Versintern unterer einem Druck im Bereich von 0,5 bis 30 kg/cm² durchgeführt wird.

9. Verfahren nach Anspruch 7 oder 8, **dadurch gekennzeichnet, dass** das Versintern unter Einstrahlung von Mikrowellenenergie erfolgt.

10. Verfahren nach einem der Ansprüche 7 bis 9, **dadurch gekennzeichnet, dass** Heißluft oder Wasserdampf in die Form eingedrückt wird.

## Claims

1. A process for producing foam moldings, which comprises the steps
i) prefoaming of expandable styrene polymers to form foam particles,
ii) application of an aqueous polymer dispersion to the foam particles,
iii) drying of the polymer dispersion to form a water-insoluble polymer film,
iv) introduction of the foam particles coated with the polymer film into a mold and sintering.

2. The process according to claim 1, wherein drying of the polymer dispersion applied to the foam particles is effected by means of air or nitrogen at a temperature in the range from 0 to 80°C.

3. The process according to claim 1 or 2, wherein an aqueous polymer dispersion obtained by mixing
a) from 40 to 80 parts by weight of a water glass solution having a water content of from 40 to 90% by weight,
b) from 20 to 60 parts by weight of a water glass powder having a water content of from 0 to 30% by weight and
c) from 5 to 40 parts by weight of an aqueous polymer dispersion having a solids content of from 10 to 60% by weight
is used.

4. The process according to any of claims 1 to 3, wherein the dried polymer film has a glass transition temperature in the range from -60 to +60°C.

5. The process according to any of claims 1 to 4, wherein a free-radical emulsion polymer of ethylenically unsaturated monomers is used an aqueous polymer dispersion.

6. The process according to any of claims 1 to 5, wherein the weight ratio of foam particles/coating mixture after drying is from 2:1 to 1:10.

7. The process according to any of claims 1 to 6, wherein the density of the foam moldings in accordance with DIN 53420 is from 10 to 120 kg/m³.

8. The process according to claim 7, wherein sintering is carried out under a pressure in the range from 0.5 to 30 kg/cm².

9. The process according to claim 7 or 8, wherein sintering is effected with introduction of microwave energy.

10. The process according to any of claims 7 to 9, wherein hot air or steam is injected into the mold.

## Revendications

1. Procédé pour la production de corps moulés en mousse, comprenant les étapes
i) prémoussage de polymères de styrène expansibles, en particules de mousse,
ii) application d'une dispersion aqueuse de polymère sur les particules de mousse,
iii) séchage de la dispersion de polymère avec formation d'un film de polymère insoluble dans l'eau,
iv) introduction dans un moule et frittage des particules de mousse enrobées avec le film de polymère.

2. Procédé selon la revendication 1, **caractérisé en ce que** le séchage de la dispersion de polymère appliquée sur les particules de mousse s'effectue avec de l'air ou de l'azote à une température dans la plage de 0 à 80 °C.

3. Procédé selon la revendication 1 ou 2, **caractérisé en ce qu'**on utilise une dispersion aqueuse de polymère qui a été obtenue par mélange de
a) 40 à 80 parties en poids d'une solution d'orthosilicate ayant une teneur en eau de 40 à 90 % en poids,
b) 20 à 60 parties en poids d'une poudre d'orthosilicate ayant une teneur en eau de 0 à 30 % en poids, et
c) 5 à 40 parties en poids d'une dispersion aqueuse de polymère ayant une teneur en matière solide de 10 à 60 % en poids,

4. Procédé selon l'une quelconque des revendications 1 à 3, **caractérisé en ce que** le film de polymère séché présente une température de transition vitreuse dans la plage de -60 à +60 °C.

5. Procédé selon l'une quelconque des revendications 1 à 4, **caractérisé en ce qu'**on utilise en tant que dispersion aqueuse de polymère un produit de polymérisation radicalaire en émulsion de monomères à insaturation éthylénique.

6. Procédé selon l'une quelconque des revendications 1 à 5, **caractérisé en ce que** le rapport pondéral particules de mousse/mélange d'enrobage après le séchage vaut de 2:1 à 1:10.

7. Procédé selon l'une quelconque des revendications 1 à 6, **caractérisé en ce que** la densité des corps moulés en mousse, selon DIN 53420, vaut de 10 à 120 kg/m³.

8. Procédé selon la revendication 7, **caractérisé en ce que** le frittage est effectué sous une pression dans la plage de 0,5 à 30 kg/cm².

9. Procédé selon la revendication 7 ou 8, **caractérisé en ce que** le frittage s'effectue sous irradiation d'énergie haute fréquence.

10. Procédé selon l'une quelconque des revendications 7 à 9, **caractérisé en ce qu'**on introduit dans le moule de l'air chaud ou de la vapeur d'eau sous pression.
